**Europäisches Patentamt**

**European Patent Office**

**Office européen des brevets**

(19)

(11) Veröffentlichungsnummer : **0 423 478 B1**

(12) ## EUROPÄISCHE PATENTSCHRIFT

(45) Veröffentlichungstag der Patentschrift :
**12.04.95 Patentblatt 95/15**

(51) Int. Cl.[6] : **H01M 4/23**

(21) Anmeldenummer : **90116743.7**

(22) Anmeldetag : **31.08.90**

(54) **Verfahren zum Verhindern der Bleistaubbildung bei der Herstellung und Montage der Elektrodenplatten von Blei-/Säurebatterien.**

(30) Priorität : **17.10.89 DE 3934938**

(43) Veröffentlichungstag der Anmeldung :
**24.04.91 Patentblatt 91/17**

(45) Bekanntmachung des Hinweises auf die Patenterteilung :
**12.04.95 Patentblatt 95/15**

(84) Benannte Vertragsstaaten :
**AT CH DE ES FR GB IT LI SE**

(56) Entgegenhaltungen :
**DE-A- 2 503 258**
**FR-A- 1 011 329**
**US-A- 3 436 266**

(56) Entgegenhaltungen :
**PATENT ABSTRACTS OF JAPAN Bnd. 12, Nr. 465 (E-690)(3312) 7. Dezember 1988 & JP-A-63187567**
**World Patents Index Woche 7401, Derwent Publications Ltd., London, GB, AN 74-01797V & JP-B-48044025**

(73) Patentinhaber : **HAGEN Batterie AG**
**Coesterweg 45**
**D-59494 Soest (DE)**

(72) Erfinder : **Römling, Ulrich**
**Milchstrasse 10**
**D-4770 Soest-Meckingsen (DE)**
Erfinder : **Scharf, Peter**
**Simplicissimusweg 26**
**D-4770 Soest (DE)**

(74) Vertreter : **Lange, Gerd, Dipl.-Ing.**
**Patentanwalt,**
**Nachtigallenweg 8**
**D-32425 Minden (DE)**

**EP 0 423 478 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 423 478 B1

**Beschreibung**

Die Erfindung betrifft ein Verfahren zum Verhindern der Bleistaubbildung bei der Herstellung und Montage der Elektrodenplatten von Blei-/Säurebatterien.

In der Akkumulatorenindustrie kommt der Verminderung der Bleistaubbelastung am Arbeitsplatz erhebliche Bedeutung zu. Zu diesem Zweck werden sowohl leistungsstarke Absauganlagen eingesetzt als auch Entwicklungen betrieben, die die Freisetzung von Bleistaub von vornherein verhindern sollen. Dabei konzentrieren sich die Entwicklungsarbeiten bevorzugt auf die positiven Elektrodenplatten für trocken vorgeladene Bleibatterien, da diese nach der Trocknung nur eine geringe Oberflächen-Abriebfestigkeit aufweisen und dadurch im weiteren Fertigungsablauf bis hin zum Einbau der Plattensätze in die einzelnen Batteriezellen erhebliche Staubmengen in Form von Bleistaubpartikeln freisetzen.

Um dieses Problem zu lösen, wurde in der DE-C-27 23 946 und der DE-A-27 23 947 vorgeschlagen, die Platten nach dem Pastieren oder Formieren oder nach dem Waschen mit wasserunlöslichen Kunststoffen oder mit filmbildenden Silikat-Lösungen zu behandeln, z. B. durch Tauchen, Besprühen, Bewalzen o. dgl., wodurch nach der Trocknung der Platten ein staubfixierender Überzug gebildet ist, der sich chemisch weitgehend indifferent verhalten muß, damit bei der späteren Aktivierung der Batterie keine unerwünschten Fremdstoffe in den Betriebselektrolyten eingeschleppt werden.

Ähnliche Überzüge und Beschichtungen zur Abriebfestigkeit bzw. zur Staubfixierung sind auch mit cellulosehaltigen Mitteln, Klebstoffen o. dgl. vorgeschlagen worden.

Alle derartigen Überzüge oder Beschichtungen erfordern jedoch eine erhöhte Sorgfalt bei ihrer Anwendung oder besondere Maßnahmen um zu verhindern, daß sich die elektrischen Eigenschaften der Platten nicht wesentlich verschlechtern. So dürfen z. B. die Kunststoff-Überzüge gemäß der DE-C-27 23 946 eine bestimmte Dicke nicht überschreiten, da anderenfalls die elektrochemischen Vorgänge beim Laden und Entladen der Batterie behindert sind. Nach der DE-A-27 23 947 besteht die Gefahr, daß die filmbildenden Silikat-Lösungen, z. B. aus Natriumsilikat, die Oberfläche der Platten derart weitgehend abdecken mit der Folge, daß die elektrochemischen Vorgänge an der Elektrode beeinträchtigt sind. Als besondere Maßnahme werden deshalb geeignete Zusätze zu den filmbildenden Silikat-Lösungen vorgeschlagen, wie z. B. Natriumsulfat, die als Porenbildner in dem Silikat-Überzug wirken, da sie von dem Betriebselektrolyten aus dem Silikat-Überzug herausgelöst werden.

Unabhängig von dem vorstehend diskutierten Problem der Verhinderung der Bleistaubbildung ist es aus der DE-A-25 03 258 bekannt, die Entladespannung der ersten Entladung nach dem Aktivieren einer trocken vorgeladenen Batterie dadurch zu erhöhen, daß die positiven Platten nach dem Formieren mit einer alkalisch reagierenden Lösung behandelt werden, die z.B. Natriumcarbonat oder Natriumhydrogencarbonat enthält, vorzugsweise in einer Konzentration zwischen 0,1 und 1 Gew.-%. Sodann werden die mit der Lösung behandelten Platten bei einer Temperatur von etwa 60°C getrocknet.

Die Verbesserung der Erstentladespannung (30-Sekundenspannung) wird mit einem durch die Behandlung der Platten wesentlich verringerten Innenwiderstand der Platten begründet.

Aufgabe der Erfindung ist es, für die Zwecke der Verminderung der Bleistaubbelastung am Arbeitsplatz die Nachteile der bis dahin verwendeten Überzüge und Beschichtungen der Elektrodenplatten zu vermeiden und ein Verfahren zur Verbesserung der Abriebfestigkeit und damit zum Verhindern der Bleistaubbildung bei der Herstellung und Montage der Elektrodenplatten von Blei-/Säurebatterien zu schaffen, das trotz einer wirksamen Bleistaubfixierung möglichst auch eine Verbesserung der elektrischen Leistungsdaten einer damit hergestellten Batterie, insbesonderer einer trocken vorgeladenen Batterie bringen soll.

Diese Aufgabe wird durch die im Kennzeichen des Anspruches 1 angegebenen Merkmale gelöst.

Nach der Lehre der Erfindung wird nun nicht mehr die Bleistaubfixierung an den Oberflächen der Platten durch das bekannte Aufbringen von Kunststoff-Überzügen, Silikat-Beschichtungen, Klebstoffen o.dgl. angestrebt, sondern die Bleistaubfixierung wird allein auf chemischem Wege erreicht, wobei zugleich ohne irgendeinen zusätzlichen Aufwand eine wesentliche Verbesserung der 30-Sekundenspannung und der Tiefentladesicherheit einer Batterie erreicht wird, die mit den nach der Erfindung behandelten Elektrodenplatten hergestellt ist.

Am Beispiel der nach Anspruch 2 bevorzugten Ausgestaltung des erfindungsgemäßen Verfahrens, bei dem das Natriumhydrogencarbonat erst nach dem Formieren und dem Waschen der Platten auf diese aufgebracht wird und in das aktive Material der Platten eindiffundiert, soll gezeigt werden, daß das aufgebrachte Natriumhydrogencarbonat nach der Lehre der Erfindung in zweierlei Weise genutzt wird.

Zum einen reagiert ein bestimmter Teil des Natriumhydrogencarbonats mit der durch den begrenzten Waschvorgang in den formierten Platten verbliebenen Restsäuremenge an Formationssäure nach folgender Gleichung:

$$2\,NaHCO_3 + H_2SO_4 \rightarrow Na_2SO_4 + H_2O + 2\,CO_2.$$

2

Hierbei entstehen als Reaktionsprodukte Natriumsulfat, Wasser und Kohlendioxid.

Zum anderen wird der restliche Teil des auf die formierten Platten aufgebrachten Natriumhydrogencarbonats - vorgegeben durch die Konzentration der Lösung und die Aufbringungsmenge - bei der Trocknung der Platten mit einer Temperatur über 65°C nach folgender Reaktionsgleichung umgesetzt:

$$2 \, NaHCO_3 \rightarrow Na_2CO_3 + H_2O + CO_2.$$

Als Reaktionsprodukte entstehen Natriumcarbonat, Wasser und Kohlendioxid.

Die so gebildeten Salze Natriumcarbonat ($Na_2CO_3$) und Natriumsulfat ($Na_2SO_4$) kristallisieren an der Plattenoberfläche aus und blockieren damit das unerwünschte Freisetzten von Bleistaubpartikeln während des nachfolgenden Fertigungsablaufs.

Das erfindungsgemäße Verfahren zur Bindung der Bleistaubpartikel auf den Plattenoberflächen kann auch derart durchgeführt werden, daß das Natriumhydrogencarbonat bereits nach dem Pastieren auf die Platten aufgebracht wird und in das aktive Material der Platten eindiffundiert. In der dem nachfolgenden Reifungsprozeß der Platten vorgeschalteten Vortrocknungsstrecke der Platten bei Temperaturen über 65°C erfolgt dann ebenfalls die beschriebene Natriumcarbonat-Kristallbildung auf den Plattenoberflächen, und das restliche Natriumhydrogencarbonat kristallisiert in den Poren aus. Somit ist nach der Lehre der Erfindung auch bereits bei unformierten Platten eine Blockierung der Bleistaubpartikel auf den Plattenoberflächen erreichbar.

Grundsätzlich gilt für alle Ausgestaltungen des erfindungsgemäßen Verfahrens, daß die mit den Salzkristallen des Natriumsulfats und/oder des Natriumcarbonats besetzten Plattenoberflächen ganz wesentlich verfestigt sind, mithin also die Salzkristalle einen Abriebschutz gewährleisten, so daß der weitere Fertigungsablauf und die Handhabung der Platten bis hin zum Einbau der Plattensätze in die Batteriezellen ohne nennenswerten Abrieb, d. h. Freisetzung von Bleistaubpartikeln durchführbar ist. Damit ist ein wesentlicher Teil der gestellten Aufgabe gelöst, d. h. die schädliche Bleistaubbelastung der Arbeitsplätze in der Fertigung und Montage von Blei-/Säurebatterien ist weitestgehend reduziert.

Das erfindungsgemäße Verfahren ist besonders vorteilhaft bei der Herstellung trocken vorgeladener Batterien anzuwenden. Denn mit dem neuen Verfahren ist zugleich erreicht, daß der trocken vorgeladenen Batterie zum Zeitpunkt ihrer Aktivierung, d. h. beim Einfüllen der Füllschwefelsäure, ohne irgendeinen zusätzlichen Aufwand oder eine sonstige ergänzende Maßnahme Natriumsulfat zur Verfügung steht. Einerseits reagiert das auf den Plattenoberflächen vorhandene Natriumcarbonat mit der Füllschwefelsäure unter Bildung von Natriumsulfat, und andererseits wird das bereits vorhandene kristalline Natriumsulfat im Betriebselektrolyten gelöst.

Natriumsulfat im Betriebselektrolyten verbessert die Tiefentladefestigkeit der Batterie, wie dies für naß ausgelieferte Hochleistungsbatterien bekannt ist. Bei naß ausgelieferten Batterien läßt sich das Natriumsulfat problemlos im industriellen Fertigungsprozeß zugeben. Bei trocken ausgelieferten Batterien, die der Kunde später erst durch Einfüllen von Säure selbst aktivieren muß, war dies bisher nicht praktikabel, da dem Endkunden das Beigeben von irgendwelchen Zusätzen zu einer Säure aus Sicherheitsgründen nicht zuzumuten ist. Hier bietet das erfindungsgemäße Verfahren eine überzeugende Lösung.

Eine besonders zweckmäßige Ausgestaltung des erfindungsgemäßen Verfahrens sieht vor, daß die auf die Platten aufgebrachte definierte Mengen Natriumhydrogencarbonat so bemessen ist, daß nach dem Einfüllen der Füllschwefelsäure im Betriebselektrolyten eine Konzentration zwischen 0,5 - 25g Natriumsulfat/Liter der der Batteriezelle vorherrscht.

Das beim Einfüllen der Füllschwefelsäure umgewandelte Natriumcarbonat und die in Lösung gegangenen Natriumsulfatkristalle hinterlassen eine völlig saubere Oberfläche des aktiven Materials der Elektrodenplatten. Im Ergebnis können daher schon kurz nach der Aktivierung trocken vorgelandener Batterien die elektrochemischen Vorgänge beim Laden und Entladen der Batterie ohne Behinderung ablaufen. Bei den bisher zur Bleistaubfixierung aufgebrachten weitgehend wasserunlöslichen Kunststoff-Beschichtungen, Silikat-Überzügen, Klebstoffen o. dgl. ist dies nicht der Fall, da bei Inbetriebnahme der Batterie, und auch noch längere Zeit nach der Aktivierung der Batterie, Teilbereiche der Plattenoberfläche durch derartige Beschichtungen oder Überzüge abgedeckt sind und die elektrochemischen Vorgänge der Batterie mehr oder weniger stark behindern.

Bei den nach der Lehre der Erfindung behandelten Platten ist auch die gewünschte Porosität der Oberfläche des aktiven Materials verbessert. Diese Verbesserung resultiert in erster Linie aus der relativ starken Kohlendioxid-Entwicklung aufgrund der chemischen Reaktionen, die in der beschriebenen Weise im wesentlichen in dem aktiven Material der Platte ablaufen. Das Kohlendioxid-Gas muß ebenso wie der in den Platten beim Trocknungsvorgang gebildete Wasserdampf aus dem aktiven Material austreten bzw. wird aus diesem ausgetrieben und bildet dabei zusätzliche Poren im aktiven Material und an der Plattenoberfläche.

Daraus ergibt sich eine deutliche Verbesserung der sogenannten 30-Sekundenspannung, die beim Start einer Batterie ohne vorherige Ladung vorhanden ist. Als Beispiel ist die nachstehende Versuchsreihe mit einer 12 V-Batterie zu nennen. Die 30-Sekundenspannung betrug:

3

| A) bei unbehandelten Platten | B) bei in 10%iger $NaHCO_3$-Lösung getauchten Platten |
|---|---|
| 9,28 V | 9,66 V |
| 9,51 V | 9,61 V |
| 9,37 V | 9,68 V |

Die vorstehenden Meßwerte wurden direkt nach Fertigstellung der jeweiligen trocken vorgeladenen Batterien gemessen. Vergleichsmessungen wurden an trocken vorgeladenen Batterien nach einer 6-monatigen Lagerzeit durchgeführt, und es wurde die gleiche Verbesserung der 30-Sekundenspannung der nach der Erfindung behandelten Elektrodenplatten bestätigt.

**Patentansprüche**

1. Verfahren zum Verhindern der Bleistaubbildung bei der Herstellung und Montage der Elektrodenplatten von Blei-/Säurebatterien,
   - in dem die fertig pastierten oder die formierten und gewaschenen Platten mit einer Lösung zur Staubfixierung behandelt, d. h. in diese Lösung getaucht, mit dieser Lösung besprüht oder benetzt werden,
   dadurch gekennzeichnet,
   - daß die Platten mit einer Natriumhydrogencarbonat-Lösung oder einer anderen Alkali- oder Erdalkalihydrogencarbonat-Lösung
   behandelt werden,
   wobei eine mindestens 1%ige Lösung auf die Platten aufgebracht wird und in das aktive Material der Platten eindiffundiert,
   - und daß sodann die Platten mit einer Temperatur über 65°C getrocknet werden.

2. Verfahren nach Anpruch 1,
   - bei dem die formierten und gewaschenen Platten mit einer Lösung zur Staubfixierung behandelt werden,
   dadurch gekennzeichnet,
   - daß der Waschvorgang nach dem Formieren der Platten derart begrenzt ist, daß eine Restmenge an Formationssäure in den Platten verbleibt,
   - daß die gewaschenen Platten vor ihrer Trocknung mit einer Natriumhydrogencarbonat-Lösung behandelt werden,
   wobei eine mindestens 1%ige Lösung
   auf die Platten aufgebracht wird und in das aktive Material der Platten eindiffundiert,
   - und daß sodann die Platten mit einer Temperatur über 65°C getrocknet werden.

3. Verfahren nach Anspruch 1 oder 2,
   dadurch gekennzeichnet,
   daß die auf die Platten aufgebrachte Menge Natriumhydrogencarbonat so bemessen ist, daß nach Einfüllen des Betriebselektrolyten eine Konzentration zwischen 0,5 - 25g Natriumsulfat/Liter in der Zelle vorherrscht.

**Claims**

1. Method of preventing the formation of lead dust when producing and assembling the electrode plates of lead-acid batteries,
   - in which the ready pasted plates or the formed and washed plates are treated with a solution to fix the dust, i.e. are immersed in this solution, and are sprayed or wetted with this solution,
   characterised
   - in that the plates are treated with a sodium hydrogen carbonate solution or another alkaline or alkaline earth hydrogen carbonate solution,

at least a 1 % solution being applied to the plates and being diffused into the active material of the plates,

- and in that the plates are then dried at a temperature of more than 65°.

2. Method according to claim 1,
- wherein the formed and washed plates are treated with a solution to fix the dust, characterised
- in that, after the formation of the plates, the washing process is restricted in such a manner that a residue of formation acid remains in the plates,
- in that, prior to being dried, the washed plates are treated with a sodium hydrogen carbonate solution, at least a 1 % solution being applied to the plates and being diffused into the active material of the plates,
- and in that the plates are then dried at a temperature of more than 65°.

3. Method according to claim 1 or 2, characterised in that the quantity of sodium hydrogen carbonate, applied to the plates, is so measured that, after the operational electrolyte has been filled, a concentration of between 0.5 g and 25 g sodium sulphate/litre exists in the cell.


## Revendications

1. Procédé pour empêcher la formation de poussières de plomb lors de la fabrication et du montage de plaques d'électrodes de batteries plomb/acide, dans lequel les plaques déjà empâtées ou en plaques formées et lavées sont traitées au moyen d'une solution de fixation de poussière, c'est-à-dire sont plongées dans une solution, pulvérisées de cette solution ou mouillées de cette solution, caractérisé en ce que les plaques sont traitées au moyen d'une solution de bicarbonate de sodium, ou d'une autre solution de bicarbonate alcalin ou alcalino-terreuse, une solution d'au moins un pour cent étant appliquée sur les plaques pour y diffuser dans le matériau actif de ces plaques, et en ce que les plaques sont ensuite séchées à une température supérieure à 65°C.

2. Procédé selon la revendication 1,
- dans lequel les plaques formées et lavées sont traitées au moyen d'une solution de fixation de la poussière, caractérisé en ce que
- le procédé de lavage, après le formage des plaques est limité de telle manière qu'il subsiste dans les plaques une quantité rémanente de l'acide de formation,
- les plaques nettoyées sont traitées avant séchage avec une solution de bicarbonate de sodium, une solution d'au moins 1% étant appliquée aux plaques pour y diffuser dans le matériau actif de ces plaques,
- et en ce que les plaques sont ensuite séchées à une température supérieure à 65°C.

3. Procédé selon la revendication 1 ou 2, caractérisé en ce que la quantité de bicarbonate de sodium à appliquer est calculée de telle sorte qu'après le remplissage de l'électrolyte de fonctionnement, une concentration de 0,5 à 25 g de sulfate de sodium/litre préexiste dans la cellule.